# EUROPEAN PATENT SPECIFICATION

(11) **EP 1 775 266 B1**
(45) Date of publication and mention of the grant of the patent: **09.04.2014**
(21) Application number: 05734441.8
(22) Date of filing: 22.04.2005
(51) Int. Cl.: C02F 1/467, D06F 39/00, D06F 39/08

(54) **ION ELUTION UNIT AND APPARATUS COMPRISING SAME**
IONENELUTIONSEINHEIT UND VORRICHTUNG DAMIT
UNITÉ D'ÉLUTION IONIQUE ET APPAREIL UTILISANT LADITE UNITÉ

(30) Priority: 25.06.2004 JP 2004188542
(43) Date of publication of application: 18.04.2007
(73) Proprietor: Sharp Kabushiki Kaisha, Osaka-shi, Osaka 545-8522 (JP)
(72) Inventor: IKEMIZU, Mugihei, Osaka-Shi, Osaka 5470002 (JP)
(74) Representative: Treeby, Philip David William
(86) International application number: PCT/JP2005/007672
(87) International publication number: WO 2006/001115

(56) References cited:
- DE-A1- 10 211 722
- JP-A- 11 029 473
- JP-A- 2002 081 121
- JP-A- 2002 219 463
- JP-A- 2004 173 717
- US-A1- 2004 035 798

## Description

### Technical Field

The present invention relates to an ion eluting unit that elutes antibacterial metal ions into water, and an apparatus (e.g., washing machine) that adds the metal ions generated by the ion eluting unit to water for application.

### Background Art

During washing performed by a washing machine, a conditioning substance is often added to water, rinsing water in particular. A softener or starch is generally used as a conditioning substance. In addition to a conditioning substance, there has been recently a growing need for a finishing treatment that provides laundry with antibacterial properties.

From a hygiene standpoint, it is desirable that laundry be dried in the sun. Due to a growing female employment rate in recent years, however, in more and more households, nobody stays home in the daytime. Such households have no other choice than to rely on drying laundry indoors. Even households where someone stays home need to dry laundry indoors when it rains.

In the indoor drying, bacteria or mold is more likely to propagate in the laundry than in the sun drying. This trend is more remarkable when it takes much time to dry laundry, such as in high humidity condition, e.g., rainy season, or low temperature condition. The laundry may give out a foul smell, depending on the propagation condition. Therefore, households that ordinarily have no choice other than the indoor drying have a strong need for subjecting fabrics to an antibacterial treatment.

Recently, more and more clothes have textiles that are subjected to an antibacterial-deodorizing treatment or bacteria-control treatment. However, it is difficult to offer the household with textile products that are all subjected to an antibacterial-deodorizing treatment. Moreover, the effect of the antibacterial-deodorizing treatment decreases with the increasing number of washes.

Accordingly, there has arisen an idea for subjecting laundry to an antibacterial treatment in each wash. Patent document 1, for example, discloses an electric washing machine equipped with an ion generator that generates metal ions, such as silver ions, copper ions, or the like, having sterilizing capability. Patent document 2 discloses a washing machine including a silver-ion-adding unit that adds silver ions to washing water.

Such an apparatus that utilizes antibacterial metal ions generally adopts an ion eluting unit that applies a voltage between electrodes so as to elute metal ions from the electrode. For example, to add silver ions, the positive electrode is made of silver and placed in water, and then a voltage is applied to this electrode. As a result, reaction Ag→Ag⁺→e⁻ occurs in the positive electrode, whereby the silver ions (Ag⁺) are eluted into water. The continuous elution of the silver ions (Ag⁺) causes the positive electrode to wear.

On the other hand, in the negative electrode, reaction H⁺+e⁻→1/2H₂ occurs regardless of what material is used for this electrode. As a result, hydrogen is generated, and calcium contained in the water, or the like deposit on the surface of the electrode as scale of a calcium compound, such as calcium carbonate. Moreover, chloride and sulfide of metal composing the electrode also appear on the surface of the electrode. Thus, its prolonged use results in thick accumulation of the scale, chloride, and sulfide on the surface of the negative electrode, which presents the elution of metal ions. Thus, the elution amount of metal ions becomes unstable or the electrode wears unevenly.

Even if no scale deposits on the electrode, metal ions may not be eluted due to water quality. In cases such as where the water has high hardness, high electric conductivity, or a high chloride ion concentration, there has been a problem that the elution amount of metal ions decreases, and thus the metal ion concentration decreases, even if no scale deposits on the surface of the electrode. Specifically, in a case of water having a high concentration of ions dissolved therein, such as water having high hardness or water having high electric conductivity, reaction involving a different type of ions occurs in competition with the elution reaction of silver ions, resulting in a decrease in the efficiency of silver ion generation. When the aforementioned metal is silver, a passive film of sliver chloride is formed, thus resulting in a decrease in the efficiency of silver ion elution. As far as the quality of drinking water is concerned, in most regions of Japan, the amount of dissolved ions is small, having little effect on the elution. On the other hand, in some foreign countries, such as Europe, the amount of ions dissolved in the water is large problematically. For example, the hardness is 40 to 100 mgCaCO₃/L in Japan, whereas it becomes a large value, e.g., 200 to 300 mgCaCO₃/L, in many of the European countries.

In such regions, there arise problems, such as scale deposition on the electrode of an ion eluting unit or a decrease in the elution efficiency of metal ions due to water quality even if no such scale occurs. The scale deposition can be prevented to some extent by reversing the polarity of a voltage applied between the electrodes. In the actual environment, however, this scale deposition and the decrease in the elution efficiency due to water quality are involved complicatedly.

For example, under an environment where a sufficient amount of metal ions are eluted, even if a small amount of foreign substance, such as scale, deposits on the surface of the negative electrode, electrode metal is eluted when the polarity of this electrode is reversed to positive, thereby forming a new surface such as is formed by electropolish and also removing the foreign substance. This effect, however, decreases under an environment where a sufficient amount of metal ions are not eluted. Since the scale deposition decreases the exposed area of the electrode metal, the elution amount of metal ions decreases. Further, the scale deposition cannot be prevented due to the synergy effect between the scale deposition and the decrease in the elution amount of metal ions, thus resulting in a problem of a further decrease in the elution efficiency.

Patent document 3 discloses a technology of stably eluting silver ions even in a case of prolonged usage or water quality change. This technology prevents the degradation of electrode performance caused by scale deposition by repeating ON and OFF the supply of a current higher than when power is continuously distributed. Further, patent document 4 discloses a technology of previously recognizing the correlation between a water condition, such as water temperature or water quality, and the silver ion concentration and then performing control based on this correlation.
[Patent document 1] Japanese Utility Model Application Laid-open No. H5-74487
[Patent document 2] Japanese Patent Application Laid-open No. 2001-276484
[Patent document 3] Japanese Patent Application Laid-open No. 2000-126775
[Patent document 4] Japanese Patent Application Laid-open No. H11-207352

JP 2004-173717 discloses an ion eluting unit and apparatus mounted with the same, comprising a drive circuit that applies the voltage between electrodes to make the metal ions eluted. The polarity of the voltage applied to the electrodes is inverted cyclically at intervals of the voltage application. The current flowing through the electrodes is sensed by current sensing circuits. Moreover, the operations of the current sensing circuits are checked before the start of applying the voltage to the electrodes. The current sensing circuits start the operation of the detection when a specified time passes after the start of applying the voltage to the electrodes

JP2002-081121 discloses a sterilizer for a toilet stool that detects an electric conductivity of water fed to a urinal and calculates an electric current value, based on a correlation formula between the electric conductivity optimal for eluting silver ions in a concentration in a predetermined range and the current value, followed by impressing the current on the silver electrode. If a resistance value across the electrodes is increased from a value assumed at the time of starting the electrolysis in excess of a predetermined range, current at a value two to ten times larger than the calculated current value is impressed.

DE10211722 discloses a process and apparatus for production of metal ions in water as well as prevention of depositions by introducing two electrodes of the same metal into a vessel containing water and connecting the electrodes to an automatically-controlled electronic device which produces a constant current intensity and an adjustable pulsating direct current of alternating polarity.

US2004/035798 discloses a method and apparatus for contaminant separation utilizing an interleaved array of oppositely charged electrode plates for fluid treatment. Spacing between the parallel electrode plates is graduated so that the volume of the cavities between the opposing electrodes provides varying levels of treatment of a broad range of contaminants from a variety of fluid columns. A fluid flow path extending substantially orthogonal to the direction of the electrical field established between opposing electrode plates provides a feed stream with exposure to the varying levels of electrical charges between the electrode plates.

### Disclosure of the Invention

### Problems to be Solved by the Invention

However, as in the patent document 3, the technology of turning ON and OFF the supply of a current higher than when it is supplied continuously so as to prevent the degradation of electrode performance caused by scale deposition requires a process for stripping off the scale, which makes continuous operation impossible. In addition to a problem that the water used in this process is wasted, this technology cause a problem such that a passage for exhausting this water needs to be provided separately from a passage for general use of silver ionized water. As in the patent document 4, the technology of previously recognizing the correlation between a water condition, such as water temperature or water quality, and the silver ion concentration and then performing control based on this correlation requires previous measurement of water quality in each usage condition or providing a water quality sensor for measuring all the factors for each apparatus, which is not feasible.

In view of the problems described above, it is an object of the present invention to provide an ion eluting unit capable of resolving scale deposition and a decrease in the elution efficiency due to water quality so as to efficiently and stably eluting, for a prolonged period of time, metal ions that provides antibacterial effect. More particularly, it is an object of the invention to provide an ion eluting unit less susceptible to water quality even in continuous operation without providing a mechanism or control for eliminating the influence of water quality. It is a further object of the present invention to provide an apparatus, a washing machine in particular, capable of adding, to water, metal ions generated by this ion eluting unit included therein so as to avoid adverse effects caused by propagating bacteria.

### Means for Solving the Problem

To achieve the object described above, according to a first aspect of the present invention there is provided a metal ion eluting unit according to claim 1. Preferable features according to the first aspect are set out in claims 2 to 5. According to a second aspect of the present invention, there is provided an apparatus according to claim 6. According to embodiments the susceptibility to water quality is reduced, such as hardness, electric conductivity, chloride ion concentration, water temperature, and pH.

It is preferable that the current density be 0.07 mA/mm² or more. This permits scale from depositing on the electrode. Moreover, providing a current density of 0.11 mA/mm² permits preventing a decrease in the efficiency of metal ion elution from the electrode.

It is preferable that current-voltage control of the ion eluting unit be constant-current control. This keeps the elution amount of silver ions per unit of time constant, and thus keeps the concentration constant if the rate of water flow through the ion eluting unit is constant, thereby providing silver-ion water with a sufficient concentration required for providing a silver ion effect. At the same time, a water volume detector may be provided. This permits keeping the concentration of supplied water constant -regardless of the supply water pressure or supply water rate by performing electrolyzation for a given period of time and supplying a given amount of water

### Advantages of the Invention

According to the ion eluting unit of the present invention, the current density of a current flowing between electrodes is controlled to be a predetermined value or more. This permits preventing a decrease in the efficiency of metal ions elution from the electrode due to a change in the water quality, such as water hardness, electric conductivity, chloride ion concentration, temperature, or PH. This control also permits effectively preventing scale from depositing on the electrode even when the water quality changes. More specifically, providing a current density of 0.07 mA/mm² permits preventing scale from depositing on the electrode. Moreover, providing a current density of 0.11 mA/mm² or more permits preventing a decrease in the efficiency of metal ion elution from the electrode.

Achieving the current/voltage control of the ion eluting unit by constant-current control keeps the elution amount of silver ions per unit of time constant, and thus keeps the concentration constant if the rate of water flow through the ion eluting unit is constant, thereby providing silver-ion water with a sufficient concentration required for providing a silver ion effect. At the same time, providing a water volume detector permits the concentration of supplied water to be kept constant regardless of the supply water pressure or supply water flow rate by performing electrolyzation for a given period of time and supplying a given amount of water.

Providing such an ion eluting unit and adding generated metal ions to water for application permits providing an apparatus, a washing machine in particular, which is capable of avoiding adverse effects brought by the propagation of bacteria.

### Brief Description of Drawings

[Fig. 1] A horizontal cross sectional view showing the structure of a metal ion eluting unit outside of the scope of the present invention.
[Fig. 2] A perspective view of an electrode of the metal ion eluting unit.
[Fig. 3] A block diagram of an example of a drive circuit in the metal ion eluting unit.
[Fig. 4(a)] A diagram showing the relationship between the hardness and the elution efficiency in correlation with the current densities.
[Fig. 4(b)] A diagram showing the relationship between the electric conductivity and the elution efficiency in correlation with the current densities.
[Fig. 4(c)] A diagram showing the relationship between the chloride ion concentration and the elution efficiency in correlation with the current densities.
[Fig. 5] A diagram showing an example of constant-current control and constant-voltage control performed by the metal ion eluting unit, in correlation with the electric conductivity.
[Fig. 6] A block diagram of an example of a drive circuit in a metal ion eluting unit according to the present invention.
[Fig. 7] A diagram showing an embodiment of the metal ion eluting unit mounted in a washing machine.

### List of Reference Symbols

1. Commercial power source
2. Insulating transformer
4 Constant-voltage circuit
5 Constant-current circuit
6 Main control portion
100 Metal ion generating unit
102, 103 Electrode

### Best Mode for Carrying Out the Invention

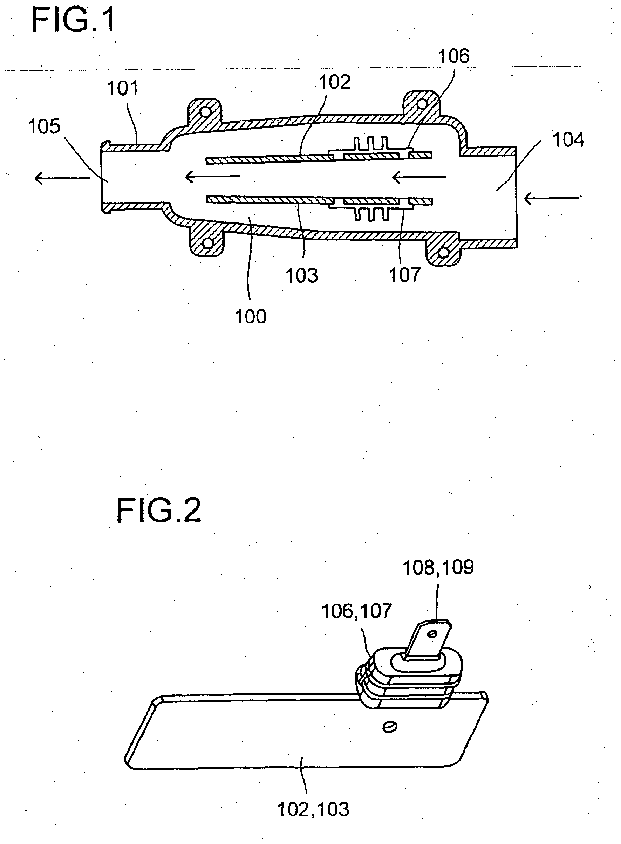

Figs. 1 and 2 show the structure of a metal ion eluting unit outside of the scope of the present invention. Fig. 1 is a horizontal cross sectional view. Fig. 2 is a perspective view of an electrode. The metal ion eluting unit 100 includes in a case 101 two plate-like electrodes: a first electrode 102 and a second electrode 103 (hereinafter each simply referred to as "electrode"). The metal ion eluting unit 100 also includes an inlet 104 at one end thereof in the longitudinal direction and a outlet 105 at the other end thereof, both provided for water flow. Inside the case 101, the two plate-like electrodes 102 and 103 are arranged along the water flow from the inlet 104 to the outlet 105 in a manner so as to face each other. Applying a predetermined voltage to the electrodes 102 and 103 in the presence of water in the case 101 causes metal ions contained in metal composing the positive electrode to be eluted from the positive electrode. As an example of the electrodes 102 and 103, silver plates each having a dimension of 15 mm×50 mm and a thickness of 1 mm may be arranged by electrode holding members 106 and 107, respectively, at a distance of approximately 5 mm from each other. On portions of the electrodes 102 and 103, there are provided connecting terminals 108 and 109, respectively, for voltage application.

The material of the electrodes 102 and 103 is not limited to silver. Any other type of metal is acceptable, as long as the metal can serve as a source of antibacterial metal ions. Examples of such optional metal include copper, an alloy of silver and copper, zinc, and the like. Silver ions eluted from a silver electrode, copper ions eluted from a copper electrode, and zinc ions eluted from a zinc electrode provide excellent sterilizing and fungicidal effects. From an alloy of silver and copper, silver ions and copper ions can be eluted simultaneously.

In the metal eluting unit 100, selection can be made between metal-ion-elution and non-metal-ion-elution, depending on whether or not a voltage has been applied. The elution amount of metal ions can be controlled by controlling duration for which a current or voltage is fed. Compared to a method of eluting metal ions from a metal ion carrier, such as zeolite, which is used as a conventional antibacterial material, the selection of whether or not to supply metal ions and also the adjustment of the metal ion concentration can be made electrically, which is convenient.

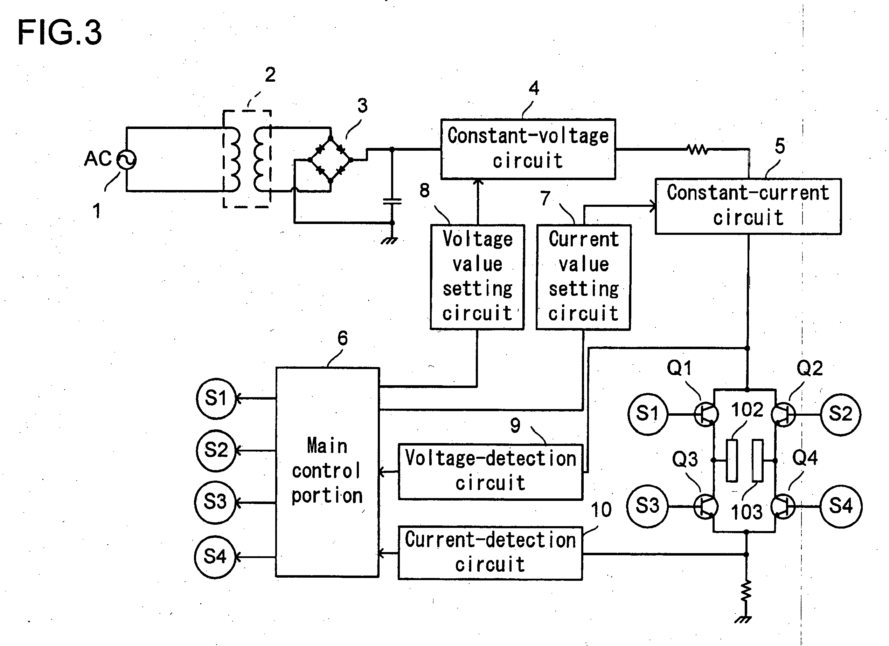

Fig. 3 is a block diagram showing a drive circuit (drive means) in a metal ion eluting unit outside of the scope of the present invention. An insulation transformer 2 is connected to a commercial power source 1 so that AC 100V is stepped down to a predetermined voltage, and also is insulated from the commercial power source for safety. The output voltage of the transformer 2 is rectified by a full-wave rectifier circuit 3, and then formed into a constant voltage in a constant-voltage circuit 4. As a subsequent step after the constant-voltage circuit 4, there is connected a constant-current circuit, which operates so as to supply a constant current regardless of a change in the resistance value between the electrodes.

A drive portion for applying a voltage to an electrode is composed of NPN-type transistors Q1 to Q4. Base signals S1 to S4 of the transistors Q1 to Q4 are respectively connected with a main control portion 6 including a microcomputer and the like. The drive portion has one end thereof connected to the constant-current circuit 5 and the other end thereof grounded. A voltage-detection circuit 9 detects potential difference (voltage) across the drive portion, and inputs the detected voltage value into the main control portion 6. A current-detection circuit 10 detects a current flowing through the drive portion, and inputs the detected current value into the main control portion 6. Based on these values, the main control portion 6 determines a value of constant voltage in the constant-voltage circuit 4 which value is set by a voltage value setting circuit 8, and also a value of constant current in the constant-current circuit 5 which value is set by a current value setting circuit 7. Assuming that a high-level voltage is supplied to the Q1 and the Q4 whereas a low- level voltage is applied to the Q2 and the Q3, The transistors Q1 and Q4 is turned ON, and the transistors Q2 and Q3 are turned OFF. In this state, a positive voltage is applied to the electrode 102, and a negative voltage is applied to the electrode 103. Consequently, a current flows from the electrode 102 on the positive side to the electrode 103 on the negative side. This generates antibacterial metal ions, as positive ions, and negative ions from the metal ion eluting units 100.

When a current flows through the metal ion eluting unit in one direction for a prolonged period of time, the electrode 102 serving as the positive electrode shown in Fig. 3 wears, and impurities such as calcium firmly adheres, as scale, to the electrode
103 serving as the negative electrode. Moreover, chloride and sulfide of the metal composing the electrode appear on the surface of the electrode. Because this leads to performance degradation of the ion eluting unit, the polarities of the electrodes are reversed to operate the electrode drive circuit.

In order to reverse the polarities of the electrodes, the main control portion 6 switches the signal levels so that the voltages of the base signals S1 to S4 are reversed to reverse the voltages applied to the electrodes. In this case, the transistors Q2 and Q3
are turned ON, and transistors Q1 and Q4 are turned OFF. As a result, a current flows from the electrode 103 now serving as the positive electrode to the electrode 102 now serving as the negative electrode. The main control portion 6 functions as a counter, so that the aforementioned switching is made every time the count reaches a predetermined value. The polarities are reversed every 20 seconds, i.e. with a cycle of 40 seconds.

In cases such as when the resistance in the electrode drive circuit changes due to electrode wear or the water quality, in particular when the current flowing between the electrodes decreases as a result of a resistance change between the electrodes 102 and 103, the constant-current circuit 5 increases its output voltage so as to avoid a decrease in the current value.

### [Example 1]

With the silver ion eluting unit as described above, silver ion elution is performed by electrolyzation under the electrolytic condition shown in Table 1 by use of water having a hardness of 300 mgCaCO₃/L, a chloride ion concentration of 160 mg/L, and a electric conductivity of 1010 µS/cm, and then the degree of scale deposition is observed.

**[Table 1]**

| Condition | Current | Voltage | Electrode area | Current density | Scale deposition |
|---|---|---|---|---|---|
| A | 29 mA | 2 V | 750 mm² | 0.04 mA/mm² | Deposited |
| B | 54 mA | 5 V | 750 mm² | 0.07 mA/mm² | Not deposited |
| C | 29 mA | 5 V | 400 mm² | 0.07 mA/mm² | Not deposited |
| D | 29 mA | 5 V | 750 mm² | 0.04 mA/mm² | Deposited |
| E | 85 mA | 7.5 V | 750 mm² | 0.11 mA/mm² | Not deposited |
| F | 29 mA | 7.5 V | 255 mm² | 0.11 mA/mm² | Not deposited |

In table 1, a constant current value is defined as 54 mA in the condition b. As the initial electrode area is 750 mm², the current density is 0.07 mA/mm². The continued use of the electrode causes the electrode to wear as power is supplied between the electrodes, thus resulting in a smaller electrode area. Therefore, the current density can be maintained at 0.07 mA/mm² or more by controlling the current value at 54 mA. Thus, by setting the initial current density at a given value, the current density can be maintained at the given value or more until the life end is reached. The above condition is partially changed for testing, so that the electrode area is smaller in the condition c, and the distance between the electrodes is larger in the condition d.

In this test, the current density is obtained by dividing a value of the current flowing between the electrodes by an effective area. When there are, instead of only a pair of electrodes, a plurality of electrodes for one polarity or both polarities, the current is a sum of currents flowing between all the electrodes. Considering the fact that silver ions are eluted from the positive electrode, and that, even if the scale deposition occurs on the negative electrode, the scale is stripped off when this electrode is turned into a positive electrode by polarity reversal, the current density of the positive electrode is important. Accordingly, the electrode effective area refers to the area of the positive electrode in the present invention.

In the columns for the scale deposition in this table, "Deposited" indicates that remarkable scale formation was observed, and "Not deposited" indicates that the electrode is not completely free from scale deposition, but the degree of scale deposition was such that no problem arises in practice. In this case, it seems that small scale deposition occurred at the negative electrode, but the scale was stripped off when this electrode turned into a positive electrode.

As shown in table 1, of these conditions, no scale deposition occurred with current densities of 0.07 mA/mm² or more; therefore, there is no correlation with the current value nor voltage. If water having a hardness of 300 mgCaCO₃/L can avoid the scale deposition, all kinds of drinking water available in the world can effectively prevent scale from depositing on the electrode.

The scale deposition on the electrode decreases the exposed area of silver, thus causing a decrease in the silver elution amount, and also resulting in a possibility of short-circuit caused by scale accumulation. However, setting the current density at 0.07 mA/mm² or more can effectively prevent scale from depositing on the electrode even in the case of water having a hardness of 300 mgCaCO₃.

### [Example 2]

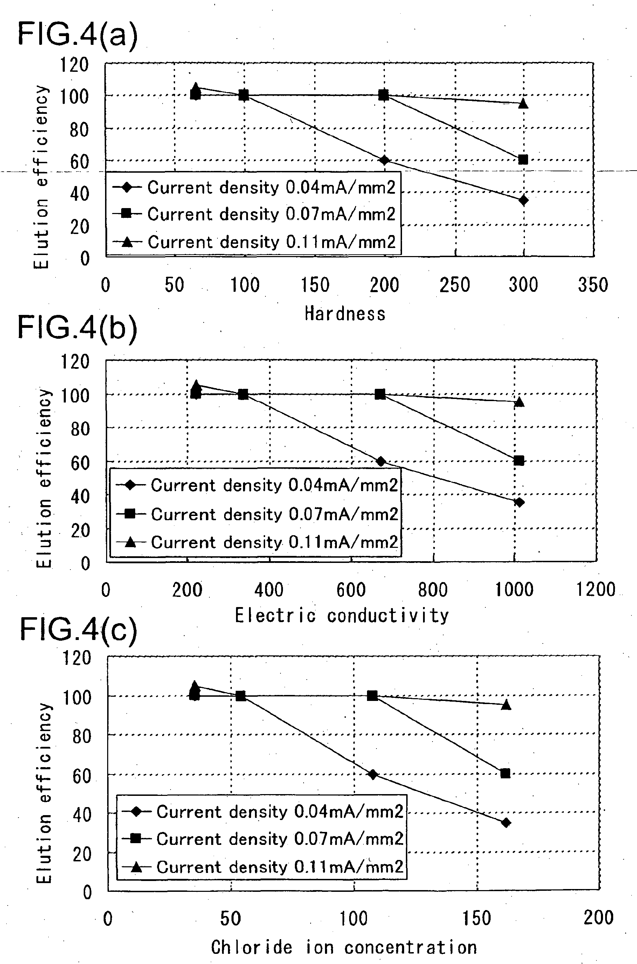

With the silver ion eluting unit as described above, measurement was made on the elution efficiency of silver ions with respect to water having a hardness of 66 to 300 mgCaCO₃/L. Figs. 2 and 4 show the results of this measurement. Water having a hardness of 66 is at the same level as standard tap water in Japan. The elution efficiency values are indicated based on the assumption that the elution efficiency of water having a hardness of 66 is 100 at a current density of 0.04 mA/mm².

**[Table 2]**

| Hardness CaCO₃/L | Electric conductivity µS/cm | Chloride ion concentration mg/L | Elution efficiency | | |
|---|---|---|---|---|---|
| | | | Current density 0.04 mA/mm² | Current density 0.07 mA/mm² | Current density 0.11 mA/mm² |
| 66 | 222 | 35 | 100 | 100 | 105 |
| 100 | 337 | 54 | 100 | 100 | 100 |
| 200 | 674 | 108 | 60 | 100 | 100 |
| 300 | 1011 | 162 | 35 | 60 | 95 |

As shown in Figs. 4(a) to 4(c), when the current density is 0.11 mA/mm², the elution efficiency hardly decreases even with the water having a hardness of 300 mgCaCO₃, an electric conductivity of 1011 µS/cm, and a chloride ion concentration of 162 mg/L. If a decrease in the elution efficiency can be avoided with water having a hardness of 300 mgCaCO₃/L, this decrease can be effectively avoided with almost all kinds of drinking water available in the world. Thus, an ion eluting unit can be provided which is capable of efficiently and stably eluting antibacterial metal ions for a prolonged period of time. This is particularly advantageous in offering an ion eluting unit which is unsusceptible to the influence of water quality even when operated continuously without being provided with a mechanism or control for eliminating the influence of water quality

Constant-current control was performed so that the current value is kept constant. The constant-current control keeps the current value constant regardless of a resistance change between the electrodes. However, because the resistance between the electrodes constantly changes depending on bubbles generated on the surface of the electrode, a change in the distance between the electrodes caused by electrode vibration, and the like, it is difficult to keep the current value completely constant; therefore, some degree of current fluctuation occurs. Moreover, a constant current may not flow with the range of voltage permitted for the circuit due to, e.g., a considerably high resistance value, thus causing a decrease in the current. Even when the aforementioned event occurs, the voltage is changed in accordance with a change in the resistance value between the electrodes; therefore, basically speaking, the voltage is increased with an increase in the resistance value whereas the voltage is decreased with a decrease in the resistance value so as to stabilize the current value between the electrodes. This control is defined as constant-current control in this embodiment.

Performing the constant-current control with high elution efficiency permits providing a constant amount of silver ions per unit of time, so that, if the flow rate of water passing through the ion eluting unit is constant, the concentration also becomes constant, thus providing silver-ion water having a sufficient concentration required for achieving a silver ion effect. To this end, the flow rate may be controlled by a valve or the like, or a valve may be provided which offers a substantially constant flow rate when the water supply pressure is in a given range. Alternatively, the operation may be performed within a given range of flow rates by providing a flow rate sensor or the like that permits electrolyzation only when the flow rate is in the given range or by sending a signal to the user to urge him/her to operate a water tap or the like to provide the given range of flow rates.

A water level sensor or a water volume sensor is provided so as to control the water volume. Performing the constant-current control with high elution efficiency provides a constant elution amount of silver ions per unit of time. Thus, by performing electrolyzation for a given period of time and supplying a given volume of water through the control of the water level or the exhaust rate, the concentration of supplied water can be made constant without depending on the water supply pressure or water supply rate. For example, the water volume and the electrolyzation period are made proportionate to each other so that, even in the case of small flow rate which requires much time to supply a predetermined water volume, a predetermined amount of sliver ions are eluted in proportion to the water volume, and then the electrolyzation is terminated and then only water is supplied. This permits the concentration to be controlled constant when the amount of water supply reaches a predetermined amount.

### [Example 3]

The silver ion eluting unit as described above is provided with a water quality detector for detecting characteristic values representing water quality (e.g., hardness, electric conductivity, chloride ion concentration, and water temperature) so that the current density is increased based on the corresponding water quality so as to ensure a constant elution amount when there are concerns, such as the scale deposition or the decrease in the elution amount in e.g., a condition where the amount of ions dissolved is large.

One of methods for increasing the current density is to increase the current value. In an example outside of the scope of the present invention, two kinds of electrolytic conditions are provided. If both of the conditions are provided for the constant-current control, two kinds of constant-current values are provided to be controlled by the constant-current circuit. When at least one of characteristic values of the water hardness, electric conductivity, chloride ion concentration, and water temperature which are detected by the water quality detector is smaller than a predetermined reference value, the lower current value is used for the constant-current control. When such a characteristic value is larger than the predetermined reference value, which brings about the concerns over the decrease in the elution amount of metal ions or the scale deposition, the higher current value is used for the constant-current control.

Specifically, when the amount of ions dissolved in the water is large, a current easily flows even with a low voltage, but this brings about the problems of the decrease in the elution amount of metal ions and the scale deposition. Thus, this problem is solved by performing the constant-current control with the higher current value to increase the current density. On the contrary, when the amount of ions dissolved in the water is relatively small, the problems of the decrease in the elution amount of metal ions and the scale deposition are less likely to occur, but the water resistance increases, which requires a high voltage for a current to flow. Thus, performing the constant-current control with the lower current value permits ensuring a sufficient elution amount of metal ions without largely increasing the voltage, thus saving power consumption and requiring no specification for the circuit or the like to withstand high voltage. Setting the electricity supply duration, etc. in accordance with the current value to elute a predetermined amount of silver ions suitable for the water volume permits a stable silver ion concentration. The number of types of the electrolytic conditions is not limited to two, but three or more types may be provided for these conditions

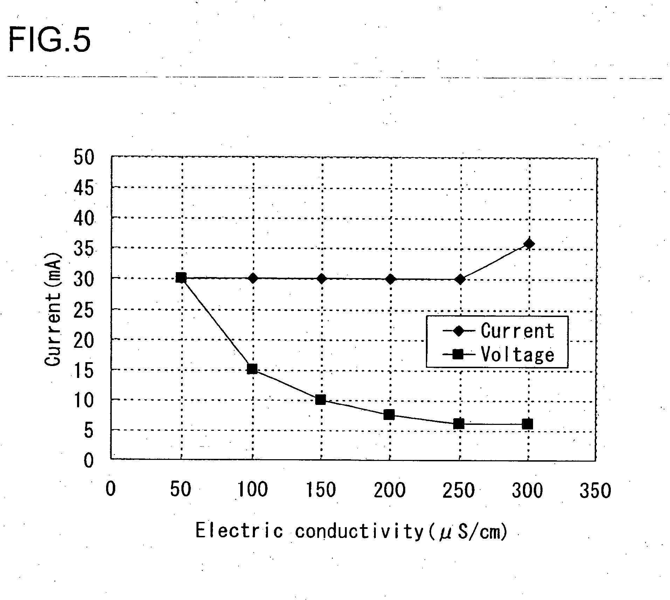

Of a plurality of types of electrolytic conditions, all of them do not have to be constant-current control. Within the scope of the invention, two kinds of electrolytic conditions are be provided; one of the conditions is constant-current control and the other one is constant-voltage control. In this case, with water quality in which the electrolytic condition is the constant-current control, the silver elution amount per unit of time is not constant, making it difficult to control the silver concentration. This difficulty can be alleviated by providing the specification such that the constant-current control is performed for water quality applicable to most regions whereas the constant-voltage control is performed only for special water quality. For example, as shown in Fig. 5, when the constant-current control is performed with 30mA at electrical conductivities of 250 µS/cm or less and the constant-voltage control is performed with 6V at electrical conductivities of over 250µS/cm, in the regions having conventional electric conductivities, operations are performed with the constant-current and the concentration can be controlled without any problem. In regions with water electric conductivities of over 250µS/cm and considerably large amounts of ions dissolved, the silver elution amount decreases if the constant-current control is performed with 30 mA, but performing the constant-voltage control causes an increase in the electric conductivity followed by an increase in the current and thus in the current density, thereby preventing a decrease in the elution amount.

In this way, performing the constant-voltage control when the electric conductivity, chloride ion concentration, hardness, and water temperature are equal to or greater than their respective given values causes the current and thus the current density to increase in accordance with the concentration of ions dissolved in the water, thereby preventing a decrease in the silver elution amount. In addition, in cases of low electric conductivity, low chloride ion concentration, low hardness, or low water temperature, a high current density is not required; therefore, performing the constant-current control can achieve a stable silver elution amount.

The constant-voltage control controls the voltage value to be kept constant regardless of a change in the resistance value between the electrodes. However, because the voltage value between the electrodes fluctuates due to a fluctuation in the supply voltage or a resistance change of circuit components attributable to temperature, it is difficult to keep the voltage value completely constant. When there is a risk that a current higher than the permitted range flows, such as in a case where the resistance value between the electrodes is considerably small, the voltage may be required to be decreased. However, even in such a case described above, a substantially constant voltage is applied between the electrodes without changing the voltage regardless of a change in the resistance value between the electrodes, which is defined as the constant-voltage control in this embodiment.

The effective electrode surface area is reduced to increase the current density. As the method of the invention for reducing the electrode area, a plurality of electrodes are provided for at least one polarity, and the number of electrodes to be supplied with power is changed. For example, two electrodes are provided for each polarity. Power is supplied to one electrode of each polarity to increase the current density; power is supplied to both of the electrodes of each polarity when it is not required to increase the current density. Providing a plurality of electrodes for each polarity in this way permits the control of the current density, and also permits increasing the usage of silver contained in the silver electrode, thereby delaying the end of life caused by the wear of the silver electrode.

As another example of method within the scope of the invention of reducing the effective area, one electrode of either one polarity is provided, and two electrodes of the other polarity are provided in such a manner as to face each other with the aforementioned electrode of one polarity in between so that the number of electrodes of the other polarity to be supplied with power can be changed.

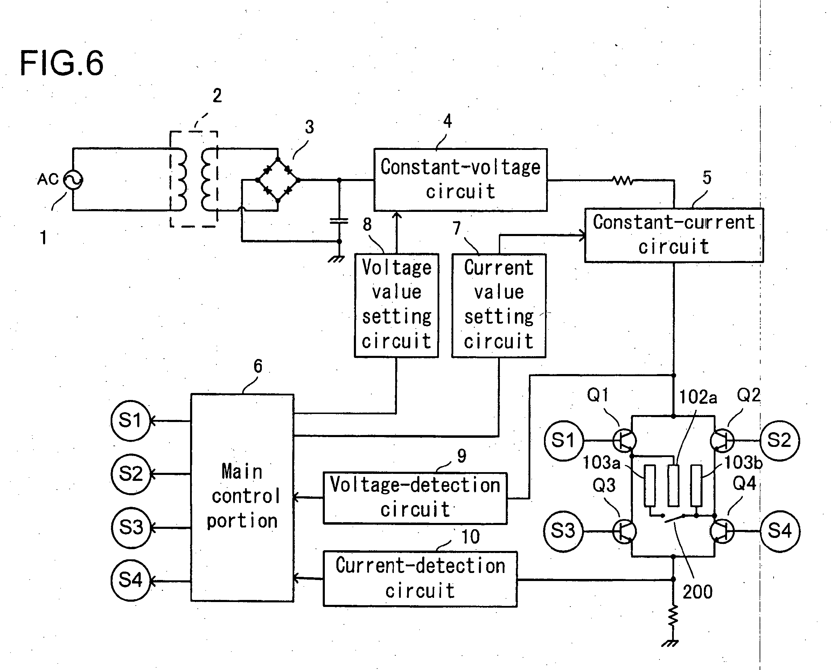

For example, it is now assumed that the metal ion eluting unit is configured as shown in Fig. 6. Two electrodes 103a and 103b of either one polarity are so mounted as to face each other with an electrode 102a of the other polarity in between. The electrode 103b can be electrically separated from the electrode 103a by turning OFF a switch 200 controlled by a control portion 6. The constant-current control is performed with a current value of 70mA under the condition that each electrode has a size of 100 mm×10 mm×10 mm, and an area of 1000 mm² for the surface facing the other electrode.

With this configuration, when the switch 200 is ON, the effective surface is a sum of the areas of the electrodes 103a and 103b, i.e., 2000 mm². Also, the other electrode 102a has an effective surface of 2000 mm², a sum of the areas of a side thereof facing the electrode 103a and a side thereof facing the electrode 103b. Thus, the current density is 0.035 mA/mm².

When the switch 200 is OFF, the electrode 103a does not function as an electrode.

The surface of the electrode 102a facing the electrode 103a does not function as an electrode, either. Therefore, the effective area of both of the electrodes is 1000 mm², and thus the current density is 0.07 mA/mm².

Thus, the effective area of the electrode can be changed by turning the switch ON/OFF. This permits changing the current density without changing the current. Because the silver elution amount per unit of time changes with a change in the current value, it is required to change the power supply duration, water volume, or the like in accordance with each current value in order to appropriately control the silver concentration or the silver elution amount. Such a change is not required when the area changes, because the silver elution per unit of time does not change.

As still another method of reducing the effective area, a different substance may be mixed in the water flowing between the electrodes. For example, mixing bubbles of gas, such as air, in between the electrodes results in no electricity flow, thereby reducing the electrode effective area, because the bubble portion has considerably lower electric conductivity than the water. In this case, it is desirable to mix a substance which has lower electric conductivity than the water. It is further desirable to mix an easily-separable substance, e.g., a substance with specific gravity difference or a substance with low solubility. An example of such substances is air.

As still another method of reducing the effective area, the water level is adjusted. This method changes the size of the submerged portion of the electrode by changing the water supply volume or the structure of the electrode periphery. The air in contact with the non-submerged portion hardly conduct electricity compared to water. In this case, therefore, only the submerged portion is effectively used as an electrode, and thus only this submerged portion serves as an effective area.

Within the scope of the present invention, the water quality to be detected includes the electric conductivity, and it may also include the chloride ion concentration, water temperature, pH, and the like. One or a plurality of them in combination may be controlled. An increase in any of these values tends to cause a decrease in the silver elution amount or scale deposition, which can be improved by increasing the current density. Figs. 4(a) to 4(c) show the relationship of the hardness, electric conductivity, chloride ion concentration, respectively, with the current density and the silver elution rate. These parameters may be sensed by using a conventional sensor. Accurate measurement values are not required here. For the hardness, for example, instead of accurate hardness measurement, the calcium concentration measured with a calcium-selective electrode may be used.

Alternatively, the water quality may be sensed by detecting the voltage and/or current between the silver electrodes. The area of the silver electrode varies with time. In addition, under the influence of water temperature, the accurate electric conductivity cannot be obtained. However, the electric conductivity is generally high when a value obtained by dividing the current value by the voltage value is large, and is generally low when this value is small. Since water having high hardness and water having high chloride ion concentration have high electric conductivity rates, approximate electric conductivity can be obtained from the voltage and/or current between the silver electrodes, and then the current density can be changed so as to provide a stable silver elution amount.

### [Example 4]

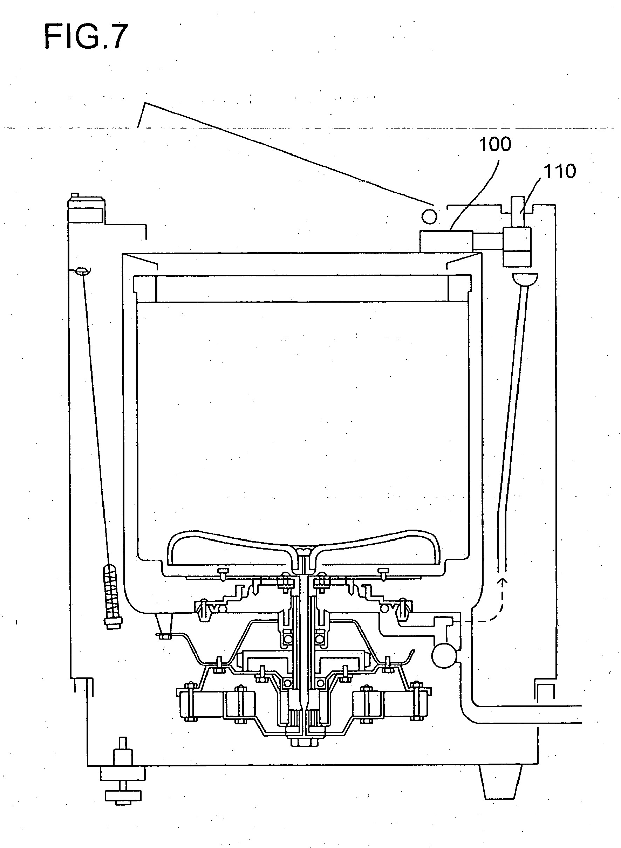

As shown in Fig. 7, if the metal ion eluting unit 100 as described above is installed in a water supply path 110 of a washing machine and then metal ions generated by this ion eluting unit is added to water, laundry is subjected to an antibacterial treatment with metal ions, thereby preventing the propagation of bacteria and mold, and also unpleasant odors.

This permits the metal ion concentration to be kept at optimum level, thus exerting an antibacterial effect without being influenced by the water quality, even if this washing machine is sold in various foreign regions of different water quality. Moreover, the shortening of the electrode life span due to a difference in the water quality no longer occurs, and labor of electrode replacement done by the user is saved, thus providing a washing machine which has good maintainability.

In addition to automatic washing machines in the form as described above, the present invention is applicable to any type of washing machine, including horizontal-drum (tumbler type) washing machines, slanted-drum washing machines, washing machines shared as a dryer, dual-tab washing machines, or the like.

The ion eluting unit of the present invention may be arranged, in combination with the embodiment described above as appropriate, in water supply paths of water-using household electrical appliances other than washing machines (e.g., dish washer, water purifier). Alternatively, this ion eluting unit may be submerged in water in the container, functioning as a standalone unit. This permits easy installation, requires no special technology for operation, and permits effective antibacterial treatment to be performed on various objects to be cleaned by use of a small amount of water, thus improving the convenience of the user. Furthermore, ion elution control can be performed accurately without the user's adjusting the ion eluting unit. This permits performing antibacterial treatment with metal ions to thereby prevent the propagation of bacteria and mold and the generation of unpleasant odors not only in cleaning but also in a wide range of usages.

### Industrial Applicability

The present invention is applicable to an apparatus used by adding to water metal ions generated by the ion eluting unit, and is particularly preferable to washing machines.

## Claims

1. A metal ion eluting unit (100) comprising:
at least one first electrode (102a) serving as either a positive or negative electrode;
at least one second electrode (103a, 103b) serving as an electrode whose polarity is opposite to a polarity of the first electrode and so arranged as to face the first electrode;
a driving means for applying a voltage between the first and second electrodes;
a water quality detector for detecting electric conductivity of water; and
a control portion (6) for controlling the voltage and current toward the first (102a) and second (103a, 103b) electrodes based on the electric conductivity detected by the water quality detector,
the metal ion eluting unit (100) eluting metal ions from the positive electrode by applying a voltage between the first (102a) and second (103a, 103b) electrodes while supplying water between the first (102a) and second (103a, 103b) electrodes,
wherein the control portion (6) is configured to reverse polarities of the first and second electrodes periodically,
change a number of electrodes supplied with electric power so as to change an effective area of the electrodes, thereby to change a current density between the electrodes in order to control a current density of a current flowing between the first and second electrodes to be a predetermined value or more,
perform constant-current control when the electric conductivity is less than a predetermined value, and
perform constant-voltage control when the electric conductivity is equal to or more than the predetermined value.

2. The metal ion eluting unit (100) according to claim 1,
wherein the predetermined value is equal to 250µS/cm, the constant-current control is performed with 30mA, and the constant-voltage control is performed with 6V.

3. The metal ion eluting unit (100) according to claim 1,
wherein the control portion (6) controls the current density between the first (102a) and second (103a, 103b) electrodes to be 0.07 mA/mm² or more to prevent scale from depositing on at least one of the first (102a) and second (103a, 1 03b) electrodes.

4. The metal ion eluting unit(100) according to any of claims 1 to 3,
wherein a material of the first (102a) and second (103a, 103b) electrodes is a metal that serves as a source of antibacterial metal ions.

5. The metal ion eluting unit (100) according to claim 4,
wherein a material of the first (102a) and second (103a, 103b) electrodes is one of silver, copper, an alloy of silver and copper, and zinc.

6. An apparatus comprising the metal ion eluting unit (100) according to any of claims 1 to 5.

## Patentansprüche

1. Metallionenabgabeeinheit (100),
mit:
mindestens einer ersten Elektrode (102a), welche entweder als positive oder als negative Elektrode dient,
mindestens einer zweiten Elektrode (103a, 103b), welche als eine Elektrode dient, deren Polarität entgegengesetzt ist zu einer Polarität der ersten Elektrode, und welche so angeordnet ist, dass sie der ersten Elektrode gegenüberliegt,
einer Treibereinrichtung zum Anlegen einer Spannung zwischen den ersten und zweiten Elektroden,
einem Wasserqualitätsdetektor zum Detektieren einer elektrischen Leitfähigkeit von Wasser und
einem Steuerbereich (6) zum Steuern der Spannung und eines Stroms auf die ersten (102a) und zweiten (103a, 103b) Elektroden zu auf der Grundlage der elektrischen Leitfähigkeit, welche durch den Wasserqualitätsdetektor detektiert wurde,
wobei die Metallionenabgabeeinheit (100) durch Anlegen einer Spannung zwischen den ersten (102a) und zweiten (103a, 103b) Elektroden Metallionen aus der positiven Elektrode abgibt, während zwischen die ersten (102a) und zweiten (103a, 103b) Elektroden Wasser zugeführt wird,
wobei der Steuerbereich (6) ausgebildet ist,
Polaritäten der ersten und zweiten Elektroden periodisch umzukehren,
eine Anzahl von mit elektrischer Energie beaufschlagten Elektroden derart zu ändern, dass eine effektive Fläche der Elektroden geändert wird, um dadurch eine Stromdichte zwischen den Elektroden zu ändern, um eine Stromdichte eines zwischen den ersten und zweiten Elektroden fließenden Stroms auf einen vorbestimmten Wert oder darüber einzustellen,
eine Konstantstromsteuerung auszuführen, wenn die elektrische Leitfähigkeit geringer ist als ein bestimmter Wert und
eine Konstantspannungssteuerung auszuführen, wenn die elektrische Leitfähigkeit gleich ist zu einem bestimmten Wert oder darüber liegt.

2. Metallionenabgabeeinheit (100) nach Anspruch 1,
wobei der bestimmte Wert gleich ist zu 250 µS/cm, die Konstantstromsteuerung mit 30 mA ausgeführt wird und die Konstantspannungssteuerung mit 6 V ausgeführt wird.

3. Metallionenabgabeeinheit (100) nach Anspruch 1,
wobei der Steuerbereich (6) die Stromdichte zwischen den ersten (102a) und zweiten (103a, 103b) Elektroden auf 0,07 mA/mm² oder darüber einstellt, um das Abscheiden eines Belags auf mindestens einer der ersten (102a) und zweiten (103a, 103b) Elektroden zu verhindern.

4. Metallionenabgabeeinheit (100) nach einem der Ansprüche 1 bis 3,
wobei ein Material der ersten (102a) und zweiten (103a, 103b) Elektroden ein Metall ist, welches als Quelle für antibakterielle Metallionen fungiert.

5. Metallionenabgabeeinheit (100) nach Anspruch 4,
wobei ein Material der ersten (102a) und zweiten (103a, 103b) Elektroden Silber, Kupfer, eine Legierung aus Silber und Kupfer oder Zink ist.

6. Vorrichtung mit einer Metallionenabgabeeinheit (100) nach einem der Ansprüche 1 bis 5.

## Revendications

1. Unité d'élution d'ions métalliques (100) comprenant :
au moins une première électrode (102a) qui sert d'électrode positive ou négative ;
au moins une seconde électrode (1 03a, 103b) qui sert d'électrode dont la polarité est opposée à une polarité de la première électrode et qui est disposée de manière à faire face à la première électrode ;
des moyens d'actionnement pour appliquer une tension entre les première et seconde électrodes ;
un détecteur de qualité d'eau pour détecter la conductibilité électrique de l'eau ; et
une partie de commande (6) pour commander la tension et le courant vers les première (102a) et seconde (103a, 103b) électrodes sur la base de la conductibilité électrique détectée par le détecteur de qualité d'eau,
l'unité d'élution d'ions métalliques (100) éluant les ions métalliques à partir de l'électrode positive en appliquant une tension entre les première (1 02a) et seconde (1 03a, 103b) électrodes tout en amenant de l'eau entre les première (102a) et seconde (1 03a, 103b) électrodes,
étant précisé que la partie de commande (6) est conçue
pour inverser périodiquement les polarités des première et seconde électrodes,
pour modifier un nombre d'électrodes alimentées en courant électrique, de manière à modifier une zone effective des électrodes, pour modifier ainsi une densité de courant entre les électrodes afin de commander une densité de courant d'un courant qui passe entre les première et seconde électrodes pour que ce soit une valeur prédéterminée ou plus,
pour effectuer une commande de courant constant quand la conductibilité électrique est inférieure à une valeur prédéterminée, et
pour effectuer une commande de tension constante quand la conductibilité électrique est égale ou supérieure à une valeur prédéterminée.

2. Unité d'élution d'ions métalliques (100) selon la revendication 1, étant précisé que la valeur prédéterminée est égale à 250 µS/cm, que la commande de courant constant est effectuée avec 30 mA et que la commande de tension constante est effectuée avec 6 V.

3. Unité d'élution d'ions métalliques (100) selon la revendication 1, étant précisé que la partie de commande (6) commande la densité de courant entre les première (102a) et seconde (103a, 103b) électrodes pour qu'elle soit de 0,07 mA/mm² ou plus afin d'empêcher un dépôt de tartre sur l'une au moins des première (1 02a) et seconde (1 03a, 103b) électrodes.

4. Unité d'élution d'ions métalliques (100) selon l'une quelconque des revendications 1 à 3,
étant précisé qu'un matériau des première (102a) et seconde (103a, 103b) électrodes est un métal qui sert de source d'ions métalliques antibactériens.

5. Unité d'élution d'ions métalliques (100) selon la revendication 4, étant précisé qu'un matériau des première (102a) et seconde (103a, 103b) électrodes est l'un des matériaux suivants : argent, cuivre, alliage d'argent et de cuivre, et zinc.

6. Appareil comprenant l'unité d'élution d'ions métalliques (100) selon l'une quelconque des revendications 1 à 5.
